Europäisches Patentamt

European Patent Office

Office européen des brevets

(11) Veröffentlichungsnummer: **0 139 888 B2**

(12) **NEUE EUROPÄISCHE PATENTSCHRIFT**

(45) Veröffentlichungstag der neue Patentschrift:
**17.05.95**

(51) Int. Cl.[6]: **A22C 13/00**

(21) Anmeldenummer: **84108830.5**

(22) Anmeldetag: **26.07.84**

(54) **Räucherverfahren für in einer thermoplastischen Kunststoffhülle erhitzte oder in heissem, schmelzflüssigem Zustand umhüllte Lebensmittel.**

(30) Priorität: **28.07.83 DE 3327175**
**20.07.84 DE 3426723**

(43) Veröffentlichungstag der Anmeldung:
**08.05.85 Patentblatt 85/19**

(45) Bekanntmachung des Hinweises auf die
Patenterteilung:
**25.11.87 Patentblatt 87/48**

(45) Bekanntmachung des Hinweises auf die
Entsheidung über den Einspruch:
**17.05.95 Patentblatt 95/20**

(84) Benannte Vertragsstaaten:
**AT BE CH DE FR GB LI LU NL SE**

(56) Entgegenhaltungen:
**EP-A- 0 103 699      EP-A- 0 113 136**
**DE-A- 2 313 994      DE-C- 2 850 181**
**FR-A- 2 441 558      GB-A- 2 035 198**
**JP-A- 564 230        JP-A-55 140 553**
**JP-A-60 180 832      US-A- 3 877 361**
**US-A- 4 303 711**

**Fleischwirtschaft n 2, 1969, p. 169-172**

**Fleischwirtschaft n 59 (1), 1979, p. 73-76**

(73) Patentinhaber: **Naturin GmbH & Co**
**Badeniastrasse 13**
**D-69469 Weinheim (DE)**

(72) Erfinder: **Erk, Gayyur, Dr.-Ing.**
**Lärchenweg 11**
**D-6941 Gorxheimertal (DE)**
Erfinder: **Korlatzki, Rudi**
**Danziger Strasse 12**
**D-6941 Laudenbach (DE)**
Erfinder: **Jäger, Herbert**
**Lindenstrasse 8**
**D-6944 Hemsbach (DE)**
Erfinder: **Lemessier, Wolfgang**
**Skandinavien Allee 49**
**D-2086 Ellerau (DE)**

(74) Vertreter: **Klöpsch, Gerald, Dr.-Ing. Patentanwalt**
**An Gross St. Martin 6**
**D-50667 Köln (DE)**

EP 0 139 888 B2

Rank Xerox (UK) Business Services
(3. 10/3.0 9/3.3.3)

Sausage and processed meats manufacturing, Rust, 1977, p: 65

Kirk Othmer, 3rd edition, vol. 18, p. 420

Plasticos vol. 24, n 143/4, Feb. 1977, p. 98-102

"Kunstdärme", Effenberger, s. 46-54 und 124-125

Mitteilungsblatt der Bundesanstalt für Fleischforschung, Kulmbach, n 33

Mitteilungsblatt der Bundesanstalt für Fleischforschnung, Kulmbach, n 65

Mitteilungsblatt der Bundesanstalt für Fleischforschung, Kulmbach, n 56

**Beschreibung**

Die Erfindung betrifft ein Verfahren zum Räuchern von während ihres Fertigungsprozesses in ihrer Umhüllung erhitzten oder im heißen schmelzflüssigen Zustand umhüllten Lebensmitteln, insbesondere Fleischwaren, wie Koch- und Brühwürste, sowie heiß abgefüllte Schmelzkäseprodukte (sogenannte Käsewurst), unter Verwendung einer thermoplastischen Kunststoffhülle.

Bei Lebensmitteln, die nach dem Umhüllen bzw. Verpacken im Verlauf des Fertigungsprozesses einer Hitzebehandlung unterzogen werden wie Fleischwaren, insbesondere Koch- oder Brühwürsten, bei denen die Hitzebehandlung der Garung dient, sowie bei im schmelzflüssigen Zustand in die Hülle abgepackten Lebensmitteln wie Schmelzkäse ist üblicherweise der Räuchervorgang von der Hitzebehandlung (Kochen bzw. Brühen) getrennt. So ist es zur Herstellung von Brühwürsten üblich, nach dem Füllen der Würste diese zum Garen nacheinander in feuchter Luft von 40 bis 60°C zu schwitzen, bei 60°C zu trocknen, mit Heißrauch von 68 bis 74°C zu behandeln, in einer mit Wasserdampfgesättigten Atmosphäre von 74°C zu brühen und schließlich durch Duschen mit Trinkwasser zu kühlen. Dazu bedient man sich heute allgemein kombinierter Rauch- und Kochkammern in die die Würste gehängt werden. Diese Vorgehensweise hat aber den Nachteil, daß sie nur auf Wurstwaren anwendbar ist, deren Hüllen aus bekanntermaßen gut räucherbaren Naturdärmen oder aus Kollagen bzw. Celluloseregenerat bestehen. Hüllen aus thermoplastischen Materialien, wie etwa die Polyamidschlauchhüllen gemäß DE-C-28 50 182, die weitgehend gewichthaltend und gas- und wasserdampfundurchlässig sind, wurden bisher als prinzipiell nicht räucherbar angesehen (s. z. B. G.Effenberger, "Kunstdärme", Alzey, 1976). Die fehlende Räucherbarkeit thermoplastischer Wursthüllen wird durch ihre geringe Gas- und Wasserdampfdurchlässigkeit und die damit verbundene Rauchundurchlässigkeit plausibel gemacht.

Um von den spezifischen Eigenschaften des frischen Holzrauches, wie dem positiven Einfluß auf Geschmack und Aroma der Wurstwaren, der konservierenden Wirkung und der Verbesserung des optischen Eindrucks durch die Rauchfarbe Gebrauch machen zu können, waren die Hersteller von Wurstwaren bisher gezwungen, Naturdärme oder Wursthüllen aus Kollagen bzw. Celluloseregenerat zu verwenden. Der Vorteil der guten Räucherbarkeit dieser Produkte wird jedoch durch erhebliche Nachteile aufgewogen. Diese Nachteile sind: hoher Gewichtsverlust aufgrund der hohen Wasserdampfdurchlässigkeit dieser Hüllen, begrenzte Haltbarkeit der Erzeugnisse durch Austrocknung, oberflächliche Fettoxidation und Vergrauung sowie mikrobiellen Verderb.

Da die synthetischen Wursthüllen, die diese Nachteile nicht aufweisen, mit den bislang zur Verfügung stehenden Methoden nicht geräuchert werden können, mußten technisch aufwendige und kostenungünstige Wege beschritten werden, wenn eine gewichthaltende, dem Verderb nur wenig ausgesetzte Wurst mit gutem Rauchgeschmack hergestellt werden sollte.

So wurden die geräucherten und gegarten Wurstwaren in räucherbaren Hüllen nach dem Räuchern und Garen mit wasserdampfdichten Tauchmassen überzogen, um die Gewichtsverluste zu reduzieren und den Schimmelbefall zu verhindern. Dafür mußten jedoch zusätzliche Kosten für die Tauchmasse und den nachgeschalteten Verfahrensschritt in Kauf genommen werden. Zudem war der Oxidationsschutz, der auf diesem Wege erreicht werden konnte, unbefriedigend. Der Wurstinhalt war wegen der opaken Tauchmasse für den Käufer nicht zu erkennen. Darüber hinaus wurde die Eignung der Ware zum unmittelbaren Verzehr beeinträchtigt. Ein anderer Weg, die genannten Nachteile zu überwinden, war die Zweitverpackung in gas- und Wasserdampfundurchlässigen Kunststoffbeuteln. Auch diese Methode verlangt zusätzliche kostenintensive Arbeitsschritte, zusätzliches Verpackungsmaterial und teure Verpackungsmaschinen.

Ein weiterer unbefriedigender Weg der Verbindung von Rauchgeschmack der Wurstware und gewichthaltender, mikrobenresistenter Wursthülle bestand darin, ganz auf die Verwendung rauchdurchlässiger Hüllen zu verzichten und den Räuchergeschmack durch die Zugabe von Rauchkonzentraten oder geräucherten Zusätzen zum Wurstbrät zu ersetzen. Das so behandelte Brät wurde dann in die nichträucherbaren Kunststoffwursthüllen gefüllt und nur noch gebrüht. Dieses Verfahren hat jedoch zusätzlich den Nachteil, daß sich unter der thermoplastischen Kunststoffhülle keine Eigenhaut auf der Wurstoberfläche bildet.

Der beschriebene Stand der Technik zeigt, daß es bisher nicht möglich war, Lebensmittel, insbesondere Fleisch- und Wurstwaren, die mit einer Hülle aus thermoplastischem Kunststoff umhüllt sind und die während ihres Fertigungsprozesses in der Umhüllung erhitzt oder im heißen, schmelzflüssigen Zustand abgepackt werden (wie Koch- und Brühwürste, sowie Käsewürste) zu räuchern.

Aufgabe der Erfindung ist daher die Bereitstellung eines Räucherverfahrens für solche Lebensmittel unter Anwendung einer thermoplastischen Kunststoffhülle für die Umhüllung dieser Lebensmittel.

Diese Aufgabe wird erfindungsgemäß durch ein Verfahren gelöst, indem man für die Umhüllung der zu räuchernden Lebensmittel eine Hülle verwendet, die dem geräucherten Endprodukt prall und faltenfrei anliegt und die aus wenigstens einem aliphatischen Polyamid besteht, welches bis zur Sättigung mindestens 3, bevorzugt mindestens 5% seines Gewichts an Wasser aufnehmen kann und dessen Glasumwandlungstemperatur Tg sich in Abhängigkeit von der Feuchtigkeitsaufnahme bis auf mindestens 3, vorzugsweise bis auf -5 und insbesondere bis auf -20° erniedrigen läßt, wobei das Räuchern in Gegenwart von Wasser oder Wasserdampf vorgenommen wird Die Hülle kann gerade oder nach Art eines Kranzdarms (für die Verpackung von Wurstkränzen) gekrümmt sein. Geeignet als aliphatische Polyamide sind Polycaprolactam, Polyaminoönanthsäureamid,Polyhexamethylenadipamid, Polyhexamethylensebacinsäureamid, ihre Mischungen oder Copolyamide. aus ihren Monomerkomponenten. Hiervon werden besonders bevorzugt Polycaprolactam, Polyhexamethylenadipamid, Mischungen dieser Polyamide und/ oder Copolyamide aus Caprolactam, Hexamethylendiamin und Adipinsäure.

Eine besondere Eignung als Lebensmittelumhüllung oder Verpackung ist generell den thermoplastischen Kunststoffhüllen mit den vorstehendbeschriebenen Materialeigenschaften zuzusprechen, wenn sie als einschichtige Folien eingesetzt werden.

Einschichtige thermoplastische Kunststofffolien, die als erfindungsgemäße Hülle für zu räuchernde Lebensmittel geeignet sind, sind etwa die Polycaprolactam-, Polyaminoönanthsäureamid-, Polyhexamethylenadipamid- und/oder Polyhexamethylensebacinsäureamidfolien der vorgenannten DE-C-28 50 182, deren Inhalt durch Verweis in die Offenbarung der vorliegenden Erfindung aufgenommen wird. Diese thermoplastischen Polyamidfolien zeichnen sich dadurch aus, daß sie bei sehr geringer Gas- und <u>Wasserdampfdurchlässigkeit</u> (s. z. B. Tabelle 1, Beispiel 1, Spalte 2 und 3, Seite 14) als in Längs- und Querrichtung schrumpffähig verstrecktes Material überraschenderweise hinreichend Rauch annehmen und durchlassen, um zu optisch und vom Geschmack her befriedigenden Verfahrensprodukten zu führen. Die vorteilhatten Eigenschaften von Polyamidhüllen. gemäß DE-C-28 50 182 wie Flexibilität, weicher Griff und faltenfreies Anliegen am Füllgut auch nach vollständigem Abkühlen des erfindungsgemäß durch kombinierte Dampf- und Rauchbehandlung erhaltenen Räucherprodukts, machen den Einsatz derartiger Hüllen besonders vorteilhaft.

Schrumpffähiges Verstrecken bedeutet, daß die Schlauchfolie im Anschluß an das biaxiale Verstrecken derart kontrolliert thermofixiert wird, das die gebrauchsfertige Hülle bei 80°C im Wasser einen Schrumpf zwischen 2 und 30 %, bevorzugt zwischen 5 und 20 % und besonders bevorzugt zwischen 10 und 15 % aufweist, so daß beim Erhitzen des verpackten Lebenmittels auf die im Bereich zwischen 70 - 85°C liegende Verarbeitungstemperatur der die Faltenfreiheit des Endproduktes sicherstellende Schrumpf ausgelöst wird. Zweck der kontrollierten Thermofixierung ist andererseits auch zu gewährleisten, daß bei den üblichen Versand- und Lagertemperaturen bis 40°C kein merklicher Schrumpf eintritt.

Im Hinblick auf die besonders für Koch- und Brühwürste gewünschte Prallheit und Faltenfreiheit des geräucherten Endprodukts sind auch solche thermoplastischen Kunststoffumhüllungen besonders geeignet, die elastisches Verhalten zeigen. Elastische Polyamidhüllen aus Polycaprolactam, Polyhexamethylenadipamid, Mischungen dieser Polyamide und/oder Polyamide aus Caprolactam, Hexamethylendiamin und Adipinsäure, die aufgrund ihrer Sättigungswasseraufnahmefähigkeit von mindestens 5 Gew.-% eingesetzt werden können, sind auf folgendem Wege erhältlich: Einschichtige Primärschlauchfolien aus den genannten Polyamiden werden multiaxial mit einem Längsreckverhältnis von 1:2,3 bis 1:4, und einem Querreckverhältnis von 1:2,5 bis 1:4,5 verstreckt und daran anschliessend unter kontrollierter multiaxialer Schrumpfung vollständig thermofixiert. Die so behandelten Polyamidschlauchfolien, die sich angesichts ihrer geringen Gas- und Wasserdampfdurchlässigkeit (s. z. B. Tabelle 1, Beispiel 2, Sp. 2 und 3, S.14) überraschenderweise unter den Bedingungen des erfindungsgemäßen Räucherverfahrens als hinreichend rauchdurchlässig erweisen, weisen folgendes elastische Verhalten auf:

Sie lassen sich bei Raumtemperatur in wassergesättigtem Zustand bei einer Innendruckbelastung zwischen 0 bis 0,6 bar nach der Gleichung

$$\Delta D = m \cdot P + c \quad \text{Innendruckbelastungsgerade (1)}$$

gleichmäßig zylindrisch aufweiten und bei anschließender Innendruckentlastung zwischen 0,6 bis 0 nach der Gleichung

$$\Delta D' = - m' \cdot p + c' \quad \text{Innendruckentlastungsgerade (2)}$$

wieder zylindrisch kontrahieren, wobei bedeuten:

$\Delta D$ Kaliberaufweitungsdifferenz in (mm) bei Innendruckbelastung

$\Delta D'$ Kaliberkontraktionsdifferenz in (mm) bei Innendruckentlastung

$m$ die Steigung der Innendruckbelastungsgeraden (1)

$m'$ die Steigung der Innendruckentlastungsgeraden (2)

p der Innendruck in (bar)

c der Ordinatenabschnitt der Innendruckbelastungsgeraden (1)

c ist stets = O.)

c' der Ordinatenabschnitt der Innendruckentlastungsgeraden (2)

und folgende Grenzbedingungen gelten:

1. die Absolutwerte für m und m' liegen zwischen 23 und 6, vorzugsweise zwischen 20 und 8 und besonders bevorzugt zwischen 17 und 11; für einen gegebenen Durchmesser unterscheiden sich die Absolutwerte für m und m' um nicht mehr als 20 %, vorzugsweise um nicht mehr als 11 % von einander.

2. c' ist stets kleiner als 4,5 mm, vorzugsweise kleiner als 2,5 mm und besonders bevorzugt kleiner als 1,5 mm.

3. Die Gleichungen (1) und (2) gelten im Innendruckbereich zwischen 0 bis 0,6 bar bzw. zwischen 0,6 bis 0 bar

Diese elastischen Schlauchfolien sind in der DE-A-32 27 945 näher beschrieben, deren Inhalt durch Verweis in die Beschreibung der vorliegenden Erfindung aufgenommen wird.

Mit diesen hinreichend rauchaufnahme- und rauchdurchlassfähigen Polyamidhüllen sind auch solche Räucherprodukte herstellbar, deren faltenfrei anliegende Hülle sich durch hervorragende Schneidbarkeit und spiralige Schälbarkeit auszeichnet und deren Oberfläche ein besonders für hochwertige Wurstwaren erwünschtes mattes Aussehen zeigt.

Das Räuchern kann nach verschiedenen Methoden durchgeführt werden. Die Räuchertemperatur liegt bei 20 bis 100°C, wobei Temperaturen von 50 bis 90°C bevorzugt werden. Das Räuchern kann vor, während oder nach der Hitzebehandlung erfolgen. Bei der gleichzeitigen Einwirkung von Wasserdampf und Rauch bei Temperaturen zwischen 60 und 100°C, vorzugsweise zwischen 70 und 85 % erfolgt gleichzeitig Räuchern und Garen. Das Räuchern kann mittels Glimm-, Dampf- oder Reibrauch oder auch mittels flüssigem Rauchkondensat (liquid smoke) erfolgen. Zur Verbesserung der Eigenhautbildung unter der Hülle wird gemäß einer bevorzugten Ausführungsform so verfahren, daß der Wasserdampf- und Rauchbehandlung eine Trockenhitzebehandlung bei 50 bis 100°C, vorzugsweise bei 60 bis 85°C vor- und ein Abkühlvorgang, der aus Duschen mit kaltem Trinkwasser und Auskühlen bei +4°C besteht, nachgeschaltet wird. Bei Anwendung von flüssigem, Rauchkonzentrat wird zweckmäßig dieses bei tieferen Temperaturen im Bereich von etwa 20 bis 35°C durch Duschen aufgebracht, worauf dann bei höheren Temperaturen im Bereich von 60 bis 90°C die Hitzebehandlung vorgenommen wird. Die Temperatur von Räucher- und Hitzebehandlung richtet sich nach den gewünschten Eigenschaften des Endprodukts, wie Garzustand und Intensität des Rauchgeschmacks. Je nach der Intensität der Rauchzugabe der Wandstärke der Hülle und dem Geschmack, den das Enderzeugnis aufweisen soll, braucht die Rauchzugabe gegebenenfalls nur während eines Teils der Wasserdampfbehandlung zu erfolgen.

Das Räucherverfahren kann in an sich bekannten, kommerziell erhältlichen kombinierten Rauch-Kochkammern durchgeführt werden.

Die Vorteile der erfindungsgemäß verwendeten Hülle bestehen darin, daß das Gewicht des umhüllten Guts auch bei längerer Lagerung gehalten wird. Darüber hinaus besteht Resistenz gegen den Verderb auslösende Mikroben wie Schimmelpilze. Außerdem liegt die Hülle dem umhüllten Gut auch nach dem Abkühlen faltenfrei an. Ein sehr wesentlicher Vorteil besteht weiterhin darin, daß toxische Bestandteile des Naturrauchs beim Räucherprozess die Hüllenwand nicht durchdringen, sondern lediglich die toxikologisch unbedenklichen Bestandteile, wobei dennoch eine nach Aussehen und Geschmack sehr ansprechende Ware erhalten wird. Die unter Anwendung der erfindungsgemäß geräucherten Hülle hergestellten Produkte weisen im Gegensatz zu den üblichen blaßrosa Aussehen der Produkte nach dem Brühen ohne Räucherung eine schöne bräunliche Rauchfarbe auf. Unter der Hülle bildet sich auf der Fleischware (Wurst) eine deutliche Eigenhaut mit der typischen goldgelben Räucherfärbung. Das typische Raucharoma und der unverwechselbare Geschmack von frischem Rauch der so geräucherten Würste entspricht dem von Brühwürsten in herkömmlichen, als räucherbar bekannten Hüllen aus Naturstoffen oder Naturstoffregeneraten.

Die folgenden Beispiele erläutern die Erfindung:

Beispiel 1:

Farblose, transparente, schrumpffähig verstreckte Wursthüllen aus Polycaprolactam gemäß DE-C-28 50 182, (Beispiel 1) mit einem Durchmesser von 60 mm wurden nach halbstündigem Eintauchen in kaltes Wasser über einen Füll- und Clipautomaten mit Fleischwurstbrät entsprechend den Leitsätzen für Fleisch und Fleischerzeugnisse der Deutschen Lebensmittelbuch-Kommission von 1975, Nr. 2.222.1 gefüllt und portioniert. Nach dem Wiegen der einzelnen Stücke wurden sie in einer Rauch- und Kochkammer mit Dampfraucherzeuger wie folgt behandelt:

30 min Hitzebehandlung in trockener Luft von 65° C

45 min Brühen und gleichzeitiges Räuchern mit rauchgesättigtem Wasserdampf bei 74° C

15 min Duschen mit kaltem Wasser, Auskühlen im Kühlraum bei +4° C über Nacht.

Beurteilung der Würste am nächsten Morgen:

a. faltenfreies, pralles Aussehen der Würste,

b. goldgelbe Färbung der vorher farblosen Hüllen durch Annahme der Rauchfarbe,

c. deutliche Eigenhautbildung der Wurstoberfläche,

d. hervorragender Geschmack der Würste nach natürlichem Rauch mit typischem Raucharoma

e. Gewichtsverlust der Würste bezogen auf das Füllgewicht kleiner als 0,2 %.

Weitere Ergebnisse sind in Tabelle 1 zusammengestellt.

Beispiel 2:

Farblose, transparente, biaxial verstreckte, elastische Wursthüllen aus Polyhexamethylenadipamid mit einem Durchmesser von 86 mm wurden nach 15 minütigem Eintauchen in warmes Wasser von 45° C über einen Füll- und Clipautomaten mit Bierschinkenbrät entsprechend Beispiel 1 prall gefüllt und portioniert. Nach dem Wiegen der einzelnen Würste wurden diese in einer Rauch- und Kochkammer mit Dampfraucherzeuger wie folgt weiterbehandelt:

90 min Brühen und gleichzeitig Räuchern mit rauchgesattigtem Wasserdampf bei 74° C

30 min Duschen mit kaltem Wasser, Auskühlen im Kühlraum bei +4° C über Nacht.

Am nächsten Morgen wurden die Würste beurteilt und zeigten das gleiche Ergebnis wie diejenigen von Beispiel 1 (siehe oben) Weitere Ergebnisse sind in Tabelle 1 zusammengestellt.

Beispiel 3:

Farblose, transparente, schrumpffähig verstreckte Wursthüllen aus Polycaprolactam gemäß DE-C-28 50 182, Beispiel 1 mit einem Durchmesser von 60 mm wurden nach halbstündigem Eintauchen in kaltes Wasser über einen Füll- und Clipautomaten mit Fleischwurstbrät entsprechend Beispiel 1 gefüllt und portioniert. Nach dem Wiegen der einzelnen Würste wurden sie in einer Rauch- und Kochkammer mit Glimmraucherzeuger wie folgt weiterbehandelt:

30 min Hitzebehandlung in trockener Luft von 65° C

60 min Brühen und gleichzeitiges Räuchern bei 74° C und 100 % rel. Feuchte.

15 min Duschen mit kaltem Wasser, Auskühlen im Kühlraum bei +4° C über Nacht.

Beurteilung der Würste am nächsten Morgen:

Die Ergebnisse entsprechen denen von Beispiel 1, abgesehen davon, daß Rauchgeschmack und -aroma weniger intensiv ausfielen als mit Rauch vom Dampfraucherzeuger.

Vergleichsbeispiel 1:

Ungefärbte, handelsübliche Kollagen-Wursthüllen mit einem Durchmesser von 60 mm wurden nach 10 minütigem Eintauchen in 5 %-ige wässrige, kalte Kochsalzlösung über einen Füll- und Clipautomaten mit Fleischwurstbrät entsprechend den Leitsätzen für Fleisch und Fleischerzeugnisse der Deutschen Lebensmittelbuch-Kommission von 1975 Nr. 2.222.1 gefüllt, portioniert und gewogen. Anschliessend wurden sie in einer Rauch- und Kochkammer mit Dampfraucherzeuger wie folgt behandelt:

20 min Hitzebehandlung in trockener Luft von 60° C

10 min Räuchern mit rauchgesättigtem Wasserdampf von 65° C, 100 % rel. Feuchte.

55 min Brühen bei 74° C, 100 % rel. Feuchte (ohne Rauch)

15 min Duschen mit kaltem Wasser, Auskühlen im Kühlraum bei 4° C über Nacht.

Beurteilung am nächsten Morgen:

Die Ergebnisse entsprechen denen von den Beispielen 1 und 2 abgesehen von stärkerer Rauchfärbung der Kollagenhüllen, die in dunkelbraun übergeht, intensiverer Eigenhautbildung und einem Gewichtsverlust von bereits über 1,5 % bezogen auf das Füllgewicht.

Weitere Ergebnisse sind in Tabelle 1 zusammengestellt.

Vergleichsbeispiel 2:

Transparente, farblose, handelsübliche Wursthüllen aus Polyethylenterephthalat (PETP) mit einem Durchmesser von 60 mm werden mit dem gleichen Fleischwurstbrät gefüllt und weiterbehandelt wie im Beispiel 1.

Die Beurteilung der Würste am nächsten Morgen gab jedoch keine Anhaltspunkte für die Räucherbarkeit dieser Kunststoff-Wursthüllen:

a. keine Verfärbung der Hüllen durch das Räuchern

b. keine Eigenhautbildung an der Oberfläche,

c. kein Rauchgeschmack oder -aroma in der Wurst,

d. die Hüllen sind faltig, obwohl die Würste keinen meßbaren Gewichtsverlust erlitten haben.

Weitere Ergebnisse sind Tabelle 1 zusammengestellt.

Vergleichsbeispiel 3:

Handelsübliche, transparente, schrumpffähige Kunststoff-Wursthüllen aus Vinylidenchlorid-Copolymerisaten (PVDC) mit einem Durchmesser von 60 mm werden unter den gleichen Bedingungen wie in Beispiel 1 genannt gefüllt, geräuchert und gebrüht.

Die Ergebnisse stimmen mit denen von Vergleichsbeispiel 2 fast überein, mit dem Unterschied, daß die PVDC-Hüllen zwar leicht birnenartig deformiert waren, aber im wesentlichen eine faltenfreie Oberfläche zeigten.

Weitere Ergebnisse sind in Tabelle 1 zusammengestellt.

Vergleichsbeispiel 4:

Das erfindungsgemäße Beispiel 1 wurde wiederholt mit dem Untershied, daß anstelle der Rauchbehandlung unter sonst gleichen Bedingungen dem Brät ein Rauchkonzentrat in der empfohlenen Menge zugesetzt wurde.

Die Würste des Vergleichsbeispiel 4 wurden zusammen mit Würsten von Beispiel 1 einem Kollektiv von Testpersonen zur Verkostung vorgelegt. Die überwiegende Mehrheit von diesen bevorzugte die Wurst gemäß Beispiel 1 wegen des natürlichen Rauchgeschmackes, des typischen Aromas von frischem Rauch und nicht zuletzt wegen der Färbung der Wurst durch Rauchenwirkung.

**Tabelle 1**          Vergleichende Zusammenfassung der Versuchsergebnisse

| Beispiele | Wasserdampf-durchlässigkt. (1) | Sauerstoff-durchlässigkt. (2) | Gewichtsverlust nach 1 Tag % (3) | nach 14 Tagen % (4) | Pilz-Resistenz (5) | Räucher-barkeit | Aussehen nach dem Abkühlen |
|---|---|---|---|---|---|---|---|
| Beispiel 1 | 25 | 28 | 0,2 | 1,0 | resistent | gut | prall |
| Beispiel 2 | 22 | 26 | 0,2 | 1,0 | resistent | gut | ohne Falten |
| Vergleich 1 Kollagenhülle | 1800 | 700 | 1,55 | 14 | anfällig | sehr gut | ohne Falten |
| Vergleich 2 PETP-Hülle | 11 | 70 | nicht messbar | 0,5 | resistent | nicht gegeben | faltig |
| Vergleich 3 PVDC-Hülle | 3 | 30 | nicht messbar | 0,2 | resistent | nicht gegeben | ohne Falten |

(1) Wasserdampfdurchlässigkeit in $\frac{g}{m^2 \cdot d}$ bei 20°C, bar und Feuchtegefälle 85 % gegen 0 % rel. Feuchte

(2) Sauerstoffdurchlässigkeit in $\frac{cm^3}{m^2 \cdot d \cdot bar}$ bei 0°C und 75% rel. Feuchte

(3) Gewichtsverlust nach dem 1 Tag, bezogen auf Füllgewicht, durch Wiegen der Würste, Durchschnittswerte von 10 Einzelmessungen

(4) Gewichtsverlust nach 14 Tagen Aufbewahrung im Kühlraum bei +4°C, bezogen auf das Füllgewicht, Durchschnittswerte von 10 Einzelmessungen

(5) Pilzanfälligkeit geprüft nach ASTM D 1924-63, unvollständiger Agar Czapek-Dox als Nährmedium ungereinigte Proben, geimpft mit Sporensuspension in dest. Wasser, bei 29°C, 85 % rel. Feuchte

EP 0 139 888 B2

**Patentansprüche**

1. Verfahren zum Räuchern von während ihres Fertigungsprozesses in ihrer Umhüllung erhitzten oder im heißen, schmelzflüssigen Zustand umhüllten Lebensmitteln, insbesondere Fleischwaren, <u>dadurch gekennzeichnet</u>, daß man für die Umhüllung der zu räuchernden Lebensmittel eine dem geräucherten Endprodukt prall und faltenfrei anliegende eine Hülle verwendet, die aus wenigstens einem aliphatischen Polyamid besteht, welches bis zur Sättigung mindestens 3, bevorzugt mindestens 5 % seines Gewichts an Wasser aufnehmen kann und dessen Glasumwandlungstemperatur $T_g$ sich in Abhängigkeit von der Feuchtigkeitsaufnahme bis auf mindestens 3 °C, vorzugsweise bis auf -5 und insbesondere bis auf -20°C erniedrigen läßt, wobei das Räuchern in Gegenwart von Wasser oder Wasserdampf vorgenommen wird.

2. Verfahren nach Anspruch 1, <u>dadurch gekennzeichnet</u>, daß man eine Hülle verwendet, die aus Polycaprolactam, Polyaminoönanthsäureamid, Polyhexamethylenadipamid, Polyhexamethylensebacinsäureamid, Mischungen dieser Polyamide oder Copolyamiden aus ihren Monomerkomponenten besteht.

3. Verfahren nach Anspruch 2, <u>dadurch gekennzeichnet</u>, daß man eine Hülle verwendet, die aus Polycaprolactam, Polyhexamethylenadipamid, Mischungen dieser Polyamide und/oder Copolyamiden aus Caprolactam, Hexamethylendiamin und Adipinsäure besteht.

4. Verfahren nach Ansprüchen 1 bis 3, <u>dadurch gekennzeichnet</u>, daß man eine einschichtige Hülle verwendet.

5. Verfahren nach Ansprüchen 1 bis 4, <u>dadurch gekennzeichnet</u>, daß das Räuchern bei Temperaturen von 20 bis 100, bevorzugt 50 bis 90°C durchgeführt wird.

6. Verfahren nach einem der Ansprüche 1 bis 5, <u>dadurch gekennzeichnet</u>, daß die kombinierte Einwirkung von Wasserdampf und Rauch bei Temperaturen zwischen 60 und 100°C, vorzugsweise zwischen 70 und 85°C durchgeführt wird.

7. Verfahren nach Anspruch 6, <u>dadurch gekennzeichnet</u>, daß die Rauchzugabe nur während eines Teils der Wasserdampfbehandlung erfolgt.

8. Verfahren nach Anspruch 6, <u>dadurch gekennzeichnet</u>, daß der gleichzeitigen Wasserdampf- und Rauchbehandlung eine Trockenhitzebehandlung bei 50 bis 100°C, vorzugsweise bei 60 bis 85°C vorangeht und ein Abkühlvorgang, bestehend aus Duschen mit kaltem Trinkwasser und Auskühlen bei +4°C nachgeschaltet wird.

9. Verfahren nach Ansprüchen 1 bis 7, <u>dadurch gekennzeichnet</u>, daß das Räuchern vor, nach oder während der Hitzebehandlung erfolgt.

10. Verfahren nach Ansprüchen 1 bis 8, <u>dadurch gekennzeichnet</u>, daß das Räuchern mittels Glimm-, Dampf- oder Reibrauch oder flüssigem Rauchkondensat erfolgt.

11. Verfahren nach Anspruchen 1-7, <u>dadurch gekennzeichnet</u>, daß zunächst bei Temperaturen im Bereich von 20 bis 35°C mit flüssigem Rauchkonzentrat (liquid smoke) geräuchert und dann bei höheren Temperaturen im Bereich von 60 bis 90°C die Hitzebehandlung vorgenommen wird.

**Claims**

1. A process for smoking foodstuffs that are heated in their casing during the production process or encased when in hot, molten state, in particular meat products, characterized in that a casing lying on the smoked end product in a taught and wrinkle-free manner and consisting of at least one aliphatic polyamide which up to the point of saturation can absorb at least 3%, preferably at least 5% of its own weight of water and whose glass transition temperature $T_g$ can be lowered, depending on the moisture absorption, at least to 3°C, preferably to -5°C, and in particular to -20°C, is used to encase the foodstuffs to be smoked, and the smoking is carried out in the presence of water or steam.

8

2. The process according to claim 1 characterized in that a casing is used consisting of polycaprolactam, polyaminoenanthic acid amide, polyhexamethylene adipamide, polyhexamethylene sebacic acid amide, mixtures of these polyamides, or copolyamides of their monomer components.

3. The process according to claim 2 characterized in that a casing is used consisting of polycaprolactam, polyhexamethylene, adipamide, mixtures of these polyamides and/or copolyamides of caprolactam hexamethylene diamine and adipic acid.

4. The process according to claims 1 to 3 characterized in that a single-layer casing is used.

5. The process according to claims 1 to 4 characterized in that the smoking is carried out at temperatures from 20 to 100, preferably 50 to 90°C.

6. The process according to any one of claims 1 to 5 characterized in that the combined action of the steam and smoke is effected at temperatures between 60 and 100°C, preferably between 70 and 85°C.

7. The process according to claim 6 characterized in that the addition of smoke is made only during a part of the steam treatment.

8. The process according to claim 6 characterized in that the simultaneous steam and smoke treatment is preceded by a dry-heat treatment at 50 to 100°C, preferably at 60 to 85°C, and a cooling process, consisting of spraying with cold drinking water and cooling at +4°C, follows this steam and smoke treatment.

9. The process according to claims 1 to 7 characterized in that the smoking is carried out prior to, after or during the heat-treatment.

10. The process according to claims 1 to 8 characterized in that the smoking is carried out by means of glow, vapour, or friction smoke, or liquid smoke condensate.

11. The process according to claims 1 to 7 characterized in that initially the smoking is carried out at temperatures in the range from 20 to 35°C using liquid smoke concentrate (liquid smoke), the heat-treatment then being carried out at higher temperatures in the range from 60 to 90°C.

**Revendications**

1. Procédé pour fumer des produits alimentaires, plus particulièrement des produits à base de viande, chauffés dans leur enveloppe au cours de leur processus de préparation ou d'apprêtage, ou enveloppés à l'état fondu liquide, chaud, caractérisé en ce que, pour l'enveloppement des produits alimentaires à fumer, on utilise une enveloppe qui colle étroitement et sans plis au produit fumé et qui se compose d'au moins un polyamide aliphatique, qui, jusqu'à la saturation, peut absorber au moins 3% de préférence, au moins 5%, de son poids, d'eau et dont la température de transition vitreuse Tg se laisse abaisser, en fonction de l'absorption d'humidité, jusqu'à au moins 3°C, de préférence jusqu'à -5°C et plus particulièrement jusqu'à -20°C, où le fumage s'entreprend en présence d'eau ou de vapeur d'eau.

2. Procédé suivant la revendication 1, caractérisé en ce que l'on utilise une enveloppe qui se compose de polycaprolactame, d'amide polyaminooenanthylique, de polyhexaméthylèneadipamide, de polyhexaméthylènesébaçamide, leurs mélanges ou des copolyamides obtenus à partir de leurs composants monomères.

3. Procédé suivant la revendication 2, caractérisé en ce que l'on utilise une enveloppe qui se compose de polycaprolactame, de polyhexaméthylèneadipamide, de mélanges de ces polyamides et/ou de copolyamides constitués de caprolactame, d'hexaméthylènediamine et d'acide adipique.

4. Procédé suivant les revendications 1 à 3, caractérisé en ce que l'on utilise une enveloppe à une seule couche.

**5.** Procédé suivant les revendications 1 à 4, caractérisé en ce que l'on réalise le fumage à des températures de 20 à 100°C, de préférence de 50 à 90°C.

**6.** Procédé suivant l'une des revendications 1 à 5, caractérisé en ce que l'on entreprend l'action combinée de vapeur d'eau et de fumée à des températures qui fluctuent de 60 à 100°C, de préférence de 70 à 85°C.

**7.** Procédé suivant la revendication 6, caractérisé en ce que l'addition de fumée ne s'effectue que pendant une partie seulement du traitement par la vapeur d'eau.

**8.** Procédé suivant la revendication 7, caractérise en ce que l'on fait précéder le traitement simultané par la vapeur d'eau et la fumée par un traitement à la chaleur sèche à une température de 50 à 100°C, de préférence de 60 à 80°C et on fait suivre ce traitement simultané par des la vapeur d'eau et de la fumée d'un processus de refroidissement qui se compose d'un arrosage à l'eau froide et d'un refroidissement à +4°C.

**9.** Procédé suivant les revendications 1 à 7, caractérisé en ce que le fumage s'effectue avant, après ou pendant le traitement thermique.

**10.** Procédé suivant les revendications 1 à 8, caractérisé en ce que le fumage s'effectue à l'aide de fumée sans flamme, de fumée par vapeur ou de fumée par friction, ou à l'aide d'un condensat de fumée liquide.

**11.** Procédé suivant les revendications 1 à 7, caractérisé en ce que l'on opère d'abord le fumage à des températures qui varient de 20 à à 35°C avec un concentré de fumée liquide (liquid smoke) et en ce que l'on entreprend ensuite le traitement thermique à des températures supérieures de 60 à 90°C.